# EUROPEAN PATENT APPLICATION

(11) **EP 4 474 892 A1**
(43) Date of publication of application: **11.12.2024**
(21) Application number: 23749713.6
(22) Date of filing: 30.01.2023
(51) Int. Cl.: G02F 1/13, B60J 3/04, E06B 9/24, G02F 1/1334, G02F 1/17

(54) **MULTILAYER LAMINATE**

(30) Priority: 01.02.2022 JP 2022014084
(71) Applicant: Kuraray Europe GmbH, 65795 Hattersheim am Main (DE)
(72) Inventor: MUGURUMA, Shinichi, Tsukuba-shi, Ibaraki 305-0841 (JP)
(74) Representative: Müller-Boré & Partner Patentanwälte PartG mbB
(86) International application number: PCT/JP2023/002866
(87) International publication number: WO 2023/149397

(57) **Abstract**

A multilayer laminate is provided that is capable of appropriately adjusting haze and transmittance. A multilayer laminate (1) according to one aspect of the present invention is a multilayer laminate wherein the following are at least laminated: a substrate (11), a first light-controlling layer (21) containing a liquid crystal molecule whose oriented state changes according to an applied voltage, and a second light-controlling layer (22) containing a photochromic material.

## Description

### TECHNICAL FIELD

The present invention relates to a multilayer laminate, and relates in particular to a multilayer laminate provided with a light-controlling function.

### BACKGROUND ART

In recent years, window glass provided with a light-controlling function has become widely used in window glass for buildings, window glass for vehicles, and the like. Window glass provided with a light-controlling function as such can be configured by providing a window glass with a light-controlling sheet. As an example, the light-controlling sheet can be configured using a light-controlling layer containing a liquid crystal molecule and a pair of transparent electrode layers that interpose the light-controlling layer.

Patent Document 1 discloses art related to a light-controlling sheet that is capable of suppressing uneven coloring caused by a light-controlling layer and improving long-term reliability.

### PRIOR ART DOCUMENT

### PATENT DOCUMENT

[Patent Document 1] Japanese Unexamined Patent Application Publication No. 2020-52374

### SUMMARY OF INVENTION

### PROBLEM TO BE SOLVED BY INVENTION

When a light-controlling sheet is configured using a light-controlling layer containing a liquid crystal molecule, as with the light-controlling sheet disclosed in Patent Document 1, haze (a haze value) of the light-controlling layer can be controlled by applying a voltage to the liquid crystal molecule and changing an oriented state of the liquid crystal molecule. In other words, haze of the light-controlling layer can be appropriately controlled by changing the oriented state of the liquid crystal molecule and thereby changing a scattered state of light passing through the light-controlling layer.

However, even when the oriented state of the liquid crystal molecule is changed, it is difficult to significantly change the amount of light passing through the light-controlling layer. As such, there is a problem when a light-controlling sheet is configured using a light-controlling layer containing a liquid crystal molecule in that it is difficult to significantly change transmittance (total light transmittance).

In light of the problem described above, an object of the present invention is to provide a multilayer laminate that is capable of appropriately adjusting haze and transmittance.

### MEANS FOR SOLVING PROBLEM

The multilayer laminate according to one aspect of the present invention, being a multilayer laminate wherein the following at least are laminated: a substrate, a first light-controlling layer containing a liquid crystal molecule whose oriented state changes according to an applied voltage, and a second light-controlling layer containing a photochromic material.

In the multilayer laminate described above, the substrate may be provided with a first substrate and a second substrate, and may be laminated in the order: the first substrate, the first light-controlling layer, the second light-controlling layer, and the second substrate.

In the multilayer laminate described above, the first light-controlling layer may be a polymer-dispersed liquid crystal in which a liquid crystal molecule is dispersed within a polymer, or a polymer network type liquid crystal in which a liquid crystal molecule is arranged inside a three-dimensionally reticulated polymer network.

In the multilayer laminate described above, the photochromic material may be at least one material selected from the group consisting of: triarylmethane, stilbene, azastilbene, nitrone, fulgide, spiropyran, naphthopyran, spirooxazine, and quinone.

In the multilayer laminate described above, the second light-controlling layer may be configured using polyvinyl butyral, and the photochromic material may be dispersed within the polyvinyl butyral.

In the multilayer laminate described above, the multilayer laminate may be used in a material constituting at least one among: window glass for a vehicle, a sunroof for a vehicle, and window glass for a building.

### EFFECT OF INVENTION

According to the present invention, a multilayer laminate can be provided that is capable of appropriately adjusting haze and transmittance.

### BRIEF DESCRIPTION OF DRAWINGS

[FIG. 1] It is a cross-sectional view for describing a configuration example of the multilayer laminate according to the embodiment.
[FIG. 2] It has pictures illustrating indoor states of the sample according to an example.
[FIG. 3] It has pictures illustrating outdoor states of the sample according to the example.

### EMBODIMENT OF INVENTION

The multilayer laminate according to the present embodiment is provided with a configuration in which the following at least are laminated: a substrate, a first light-controlling layer containing a liquid crystal molecule whose oriented state changes according to an applied voltage, and a second light-controlling layer containing a photochromic material. The multilayer laminate according to the present embodiment will be described in detail below.

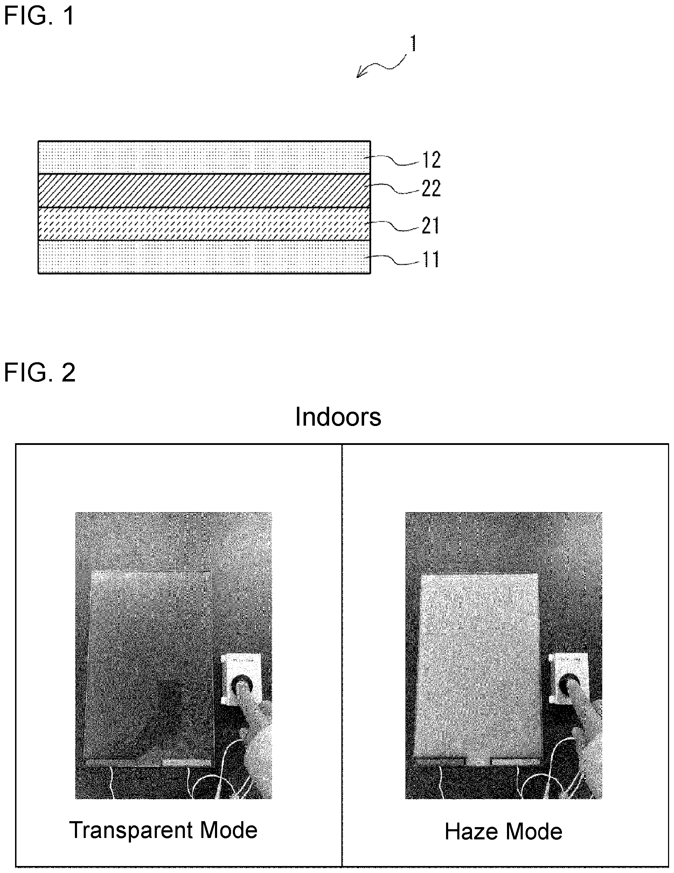

FIG. 1 is a cross-sectional view for describing a configuration example of the multilayer laminate according to the embodiment. As illustrated in FIG. 1, a multilayer laminate 1 according to the present embodiment is provided with: a first substrate 11, a second substrate 12, a first light-controlling layer 21, and a second light-controlling layer 22. That is, the multilayer laminate 1 illustrated in FIG. 1 is, for the substrate, provided with the first substrate 11 and the second substrate 12, and is laminated in the order: the first substrate 11, the first light-controlling layer 21, the second light-controlling layer 22, and the second substrate 12. In other words, the first light-controlling layer 21 and the second light-controlling layer 22 are interposed between the first substrate 11 and the second substrate 12.

The first substrate 11 and the second substrate 12 can be configured using a transparent material. For example, the first substrate 11 and the second substrate 12 can be configured using a transparent resin material or a transparent glass. When the first substrate 11 and the second substrate 12 are configured using a resin material, for example, a polycarbonate, polyethylene, polyethylene terephthalate, polyethylene naphthalate, polypropylene, vinyl chloride resin, and the like can be used.

Note that in the present embodiment, at least one of the first substrate 11 and the second substrate 12 may be dyed to a prescribed color within a range that does not deviate from the gist of the present invention. When the first substrate 11 and the second substrate 12 are dyed, a colorant may be added to the resin material or glass constituting the substrates. A colorant is a material for absorbing light having a wavelength corresponding to certain light contained in the visible light region. For example, a dye or a pigment can be used as the colorant.

The first light-controlling layer 21 contains the liquid crystal molecule whose oriented state changes according to an applied voltage. Specifically, the first light-controlling layer 21 may be a polymer-dispersed liquid crystal (PDLC: polymer-dispersed liquid crystal) in which the liquid crystal molecule is dispersed within a polymer. In addition, the first light-controlling layer 21 may be a polymer network type liquid crystal (PNLC: polymer network liquid crystal) in which the liquid crystal molecule is arranged inside a three-dimensionally reticulated polymer network.

For example, the first light-controlling layer 21 can be configured using a liquid crystal layer (not illustrated) containing the liquid crystal molecule, and two transparent electrodes (not illustrated) provided so as to interpose the liquid crystal layer. The liquid crystal layer can be configured using the polymer-dispersed liquid crystal (PDLC) or the polymer network type liquid crystal (PNLC) described above. A transparent electrode layer can be configured, for example, using a transparent oxide conductor. For example, ITO, IZO, SnO₂, and the like can be used for the transparent oxide conductor. As an additional example, the transparent electrode layer can be formed using a conductive polymer. For example, PEDOT/PSS or the like can be used for the conductive polymer.

In the present embodiment, the liquid crystal molecule contained in the first light-controlling layer 21 has an oriented state that changes according to an applied voltage that is applied to the transparent electrode layer. Specifically, when a voltage is applied to the transparent electrode layer, the liquid crystal molecule takes on an aligned state in the direction of an electrical field, dispersion of light passing through the first light-controlling layer 21 is suppressed, and the first light-controlling layer 21 becomes transparent. Meanwhile, in a state wherein no voltage is applied to the transparent electrode layer, alignment of the liquid crystal molecule takes on an irregular state, the light passing through the first light-controlling layer 21 is dispersed, and it becomes opaque (clouded).

The second light-controlling layer 22 contains a photochromic material. The photochromic material is a material that can reversibly form two isomers having different absorption spectra, wherein the molecular structure thereof changes due to the irradiation of light without changing the molecular weight. For example, in the present embodiment, a material that changes color during incident sunlight can be used as the photochromic material. A material whose color is changed by light having a wavelength of 370 nm or more, for example, can be used as the photochromic material. In the present embodiment, the second light-controlling layer 22 is provided with a function for adjusting transmittance (total light transmittance) of the multilayer laminate 1. For example, the configuration may be such that when the second light-controlling layer 22 is subjected to incident light having a wavelength of 370 nm or more, transmittance of the second light-controlling layer 22 decreases.

For example, in the present embodiment, at least one material selected from the group consisting of: triarylmethane, stilbene, azastilbene, nitrone, fulgide, spiropyran, naphthopyran, spirooxazine, and quinone may be used for the photochromic material. By appropriately selecting an amount of the photochromic material added, it becomes possible to control the transmittance to a desired level.

For example, the second light-controlling layer 22 may be configured by dispersing a photochromic material inside of a resin sheet serving as a base material. For example, polyvinyl butyral (PVB), an ethylene vinyl acetate copolymer resin (EVA), polyurethane, or the like may be used in the resin sheet. Since a response speed of the photochromic material depends greatly on the resin sheet serving as the base material, in the present embodiment, it is more preferable that plasticized polyvinyl butyral (PVB) be used as the base material of the second light-controlling layer 22.

The first substrate 11, the second substrate 12, the first light-controlling layer 21, and the second light-controlling layer 22 may be adhered together through an adhesive layer. The adhesive layer may utilize a thermoplastic resin, thermosetting resin, or photocurable resin. Of these, it is preferable that plasticized polyvinyl butyral (PVB) be used.

As described above, the multilayer laminate according to the present embodiment has the following at least laminated: a substrate, the first light-controlling layer 21 containing a liquid crystal molecule whose oriented state changes according to an applied voltage, and the second light-controlling layer 22 containing a photochromic material. Because the first light-controlling layer 21 contains the liquid crystal molecule, it is possible to control when the first light-controlling layer 21 is transparent and when the first light-controlling layer 21 is opaque according to an applied voltage. Thus, haze (a haze value) of the multilayer laminate 1 can be adjusted using the first light-controlling layer 21. In addition, because the second light-controlling layer 22 contains the photochromic material, the color of the second light-controlling layer 22 changes according to the light incident on the second light-controlling layer 22. Thus, transmittance (total light transmittance) of the multilayer laminate 1 can be adjusted using the second light-controlling layer 22.

In this manner, the present embodiment is capable of adjusting haze (a haze value) using the first light-controlling layer 21 and adjusting transmittance using the second light-controlling layer 22, and therefore can provide a multilayer laminate in which haze and transmittance can be appropriately adjusted.

For example, the multilayer laminate 1 according to the present embodiment may be used in a material configuring: window glass for a vehicle, a sunroof for a vehicle, and window glass for a building.

In particular, use of a photochromic material in the second light-controlling layer 22 makes it possible to adjust transmittance according to an intensity of sunlight, which is extremely suitable for the above applications.

Haze (a haze value) can be arbitrarily adjusted according to an application. In particular, for applications in which transparency is required, haze (a haze value) in a transparent mode is preferably no more than 3%.

Transmittance can be arbitrarily adjusted according to an application. A range of transmittance can be controlled by the amount of photochromic material added. For a sunroof for a vehicle, it is preferable that adjustment be made in the range of 50% to 4% to reduce glare from sunlight. A commercially available colorant dye or pigment may be used for the adjustment of transmittance indoors.

For example, when the multilayer laminate 1 according to the present embodiment is used in a sunroof for a vehicle, sunlight can be blocked by the second light-controlling layer 22 when the weather is sunny. In this case, haze (a haze value) of the multilayer laminate 1 can be adjusted by adjusting the voltage applied to the first light-controlling layer 21.

Meanwhile, transmittance of the second light-controlling layer 22 increases at night or when the weather is cloudy, which enables improved visibility outside of the vehicle. Likewise in this case, haze (a haze value) of the multilayer laminate 1 can be adjusted by adjusting the voltage applied to the first light-controlling layer 21. For example, increasing haze (a haze value) of the first light-controlling layer 21 can make it harder to see inside the vehicle from the outside, which allows for privacy inside the vehicle to be protected.

Note that these usage examples are merely examples, and the multilayer laminate 1 according to the present embodiment can be used for another purpose.

In addition, FIG. 1 illustrates a configuration example in which lamination is conducted in the order: the first substrate 11, the first light-controlling layer 21, the second light-controlling layer 22, and the second substrate 12. However, in the present embodiment, either the first substrate 11 or the second substrate 12 may be omitted. For example, when the second substrate 12 side is exposed to an external environment (that is, when light is incident from the second substrate 12 side), the first substrate 11 may be omitted while providing the second substrate 12 for maintaining weather resistance on second substrate 12 side. In addition, in the present embodiment, the positions of the first light-controlling layer 21 and the second light-controlling layer 22 may be reversed. That is, when having a configuration wherein light is incident from the second substrate 12 side, the second light-controlling layer 22 and the first light-controlling layer 21 may be provided in order as so from the side to which light is incident (see FIG. 1), or the first light-controlling layer 21 and the second light-controlling layer 22 may be provided in order as so from the side to which light is incident.

In addition, in the present embodiment, the first light-controlling layer 21 and the second light-controlling layer 22 may be formed as the same layer. That is, a photochromic material may be dispersed inside of the polymer-dispersed liquid crystal (PDLC) or the polymer network type liquid crystal (PNLC) configuring the first light-controlling layer 21. When configured as such, light transmission/dispersion can be controlled using the liquid crystal molecule contained in the first light-controlling layer 21 to adjust haze (a haze value), and light transmittance can be adjusted using the photochromic material dispersed in the first light-controlling layer 21.

In addition, in the present embodiment, the multilayer laminate may also contain a decorative layer to which a design is applied.

### EXAMPLES

An example of the present invention will next be described.

A multilayer laminate provided with the configuration illustrated in FIG. 1 was prepared as a sample according to the example. For the first substrate 11 and the second substrate 12, a glass was used. In addition, a PDLC film manufactured by KYUSHU NANOTEC OPTICS was used for the first light-controlling layer 21. A film in which a photochromic material was dispersed in a plasticized polyvinyl butyral (PVB) serving as a base material was used for the second light-controlling layer 22. A naphthopyran-based material was used for the photochromic material. In addition, a plasticized polyvinyl butyral (PVB) was used for an adhesive layer 24 between the first light-controlling layer 21 and the first substrate 11. The sample according to the example (multilayer laminate) was then prepared by laminating these films.

In the multilayer laminate according to the example, a "transparent mode" denotes a state in which a voltage is applied to the first light-controlling layer 21, that is, a state in which a liquid crystal molecule is aligned in the direction of an electrical field and the first light-controlling layer 21 is transparent. In addition, a "haze mode" denotes a state in which a voltage is not applied to the first light-controlling layer 21, that is, a state wherein the alignment of the liquid crystal molecule is irregular, an opaque (clouded) state in which light passing through the first light-controlling layer 21 is dispersed.

In addition, in the multilayer laminate according to the example, the color of the second light-controlling layer 22 changes according to the light incident to the second light-controlling layer 22. Specifically, as the amount of light incident to the second light-controlling layer 22 increases, the color of the second light-controlling layer 22 darkens and transmittance decreases.

In order to evaluate the multilayer laminate according to the example, the states of the first light-controlling layer 21 when in the transparent mode and the haze mode were observed indoors and outdoors. In addition, haze was measured according to JIS K 7136, and transmittance was measured for total light transmittance according to JIS K 7361-1.

FIG. 2 has pictures illustrating indoor states of the multilayer laminate according to the example, depicting the results of indoor observation of the first light-controlling layer 21 when in the transparent mode and when in the haze mode, respectively.

As illustrated in FIG. 2, when the first light-controlling layer 21 was placed in the transparent mode, the multilayer laminate according to the example took on a transparent state. That is, when placed in the transparent mode, a voltage was applied to the liquid crystal molecule contained in the first light-controlling layer 21 and the liquid crystal molecule was aligned with the direction of the electrical field, causing the first light-controlling layer 21 to take on a transparent state. In the transparent mode, haze was 2%, and total light transmittance was 86%.

Meanwhile, when the first light-controlling layer 21 was placed in the haze mode, the multilayer laminate according to the example took on a non-transparent state (clouded state). That is, when placed in the haze mode, no voltage was applied to the liquid crystal molecule contained in the first light-controlling layer 21, so the alignment of the liquid crystal molecule is irregular, the light passing through the first light-controlling layer 21 was dispersed, and it became a non-transparent state (clouded state). In the haze mode, haze was 98%, and total light transmittance was 77%.

Note that because the amount of light indoors was low, the color of the photochromic material contained in the second light-controlling layer 22 was in an unchanged state, that is, a state of high transparency, wherein the change in total light transmittance from the transparent mode to the haze mode is a mere 9%.

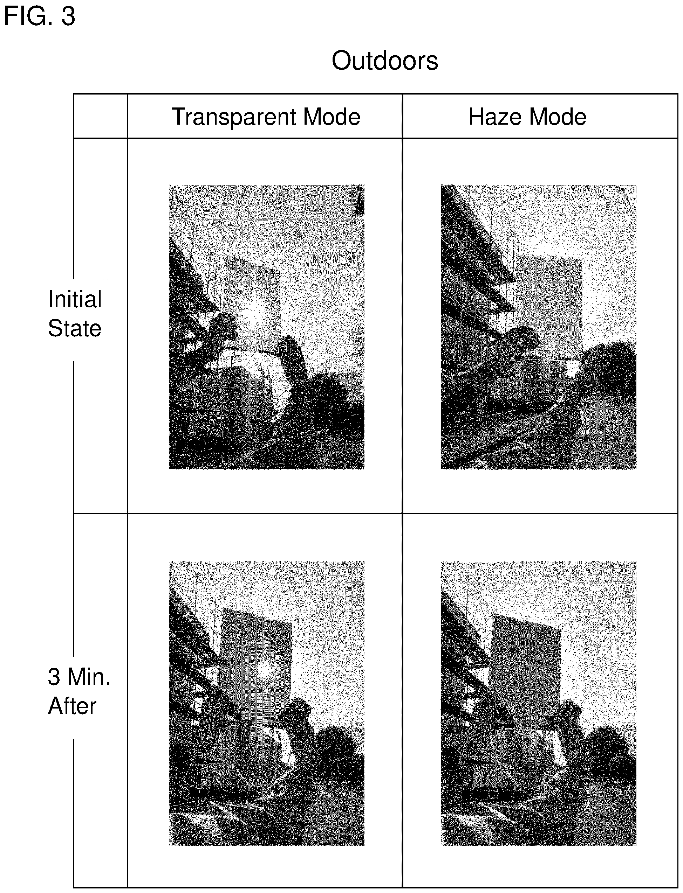

FIG. 3 has pictures illustrating outdoor states of the multilayer laminate according to the example, depicting the results of outdoor observation of the first light-controlling layer 21 when in the transparent mode and when in the haze mode, respectively. FIG. 3 illustrates the states immediately following switching of the first light-controlling layer 21 to the respective modes, and the states after three minutes.

As illustrated in FIG. 3, when the first light-controlling layer 21 was placed in the transparent mode, the multilayer laminate according to the example took on a transparent state. That is, when placed in the transparent mode, a voltage was applied to the liquid crystal molecule contained in the first light-controlling layer 21 and the liquid crystal molecule was aligned with the direction of the electrical field, causing the first light-controlling layer 21 to take on a transparent state. In addition, a ray of sunlight was transmitted immediately following the switching to the transparent mode. However, in three minutes following the switching to the transparent mode, the color of the photochromic material contained by the second light-controlling layer 22 changed to a uniform black, and transmittance was reduced. As such, the amount of sunlight passing through the multilayer laminate according to the example was significantly reduced. The total light transmittance at this time was 4%.

Meanwhile, when the first light-controlling layer 21 was placed in the haze mode, the multilayer laminate according to the example took on a non-transparent state (clouded state). That is, when placed in the haze mode, no voltage was applied to the liquid crystal molecule contained in the first light-controlling layer 21, so the alignment of the liquid crystal molecule is irregular, the light passing through the first light-controlling layer 21 was dispersed, and it became a non-transparent state (clouded state). In addition, the multilayer laminate took on a clouded state immediately following the switching to the haze mode. However, in three minutes following the switching to the haze mode, the color of the photochromic material contained in the second light-controlling layer 22 changed to black, and transmittance was reduced. The total light transmittance at this time was 4%.

In this manner, in the multilayer laminate according to the example, haze (a haze value) can be adjusted from 2% to 98% using the first light-controlling layer 21, and total light transmittance can be adjusted from 4% to 86% using the second light-controlling layer 22 by moving from indoors to outdoors. Thus, by using the multilayer laminate according to the present invention, haze and transmittance can be appropriately adjusted.

The present invention is described above based on the aforementioned embodiment, but the present invention is not limited to the configuration of the aforementioned embodiment alone, and, of course, includes various modifications, revisions, and combinations that can be conducted by a person skilled in the art within the scope of the invention according to the claims in the scope of patent claims of the present application.

The present application claims priority to Japanese Patent Application No. 2022-14084 filed February 1, 2022, the disclosure of which is incorporated herein in entirety.

### DESCRIPTION OF REFERENCE NUMERALS

- 1: Multilayer laminate
- 11: First substrate
- 12: Second substrate
- 21: First light-controlling layer
- 22: Second light-controlling layer

## Claims

1. A multilayer laminate, comprising:
a substrate;
a first light-controlling layer comprising a liquid crystal molecule whose oriented state changes according to an applied voltage; and
a second light-controlling layer comprising a photochromic material, which are at least laminated.

2. The multilayer laminate according to claim 1, wherein
the substrate comprises a first substrate and a second substrate, and
the first substrate, the first light-controlling layer, the second light-controlling layer, and the second substrate are laminated in this order.

3. The multilayer laminate according to claim 1 or 2, wherein
the first light-controlling layer is a polymer-dispersed liquid crystal in which a liquid crystal molecule is dispersed within a polymer, or a polymer network type liquid crystal in which a liquid crystal molecule is arranged inside a three-dimensionally reticulated polymer network.

4. The multilayer laminate according to any one of claims 1 to 3, wherein
the photochromic material is selected from the group consisting of: triarylmethane, stilbene, azastilbene, nitrone, fulgide, spiropyran, naphthopyran, spirooxazine, and quinone.

5. The multilayer laminate according to any one of claims 1 to 4, wherein
the second light-controlling layer is configured using polyvinyl butyral, and
the photochromic material is dispersed within the polyvinyl butyral.

6. The multilayer laminate according to any one of claims 1 to 5, wherein
the multilayer laminate is used in a material configuring at least one of: window glass for a vehicle, a sunroof for a vehicle, and window glass for a building.
